# EUROPEAN PATENT SPECIFICATION

(11) **EP 0 960 164 B1**
(45) Date of publication and mention of the grant of the patent: **08.12.2004**
(21) Application number: 98906955.4
(22) Date of filing: 16.02.1998
(51) Int. Cl.: C08L 23/02, C08L 23/10, C08C 19/02

(54) **MODIFIED POLYOLEFINS**
MODIFIZIERTE POLYOLEFINE
POLYOLEFINES MODIFIEES

(30) Priority: 17.02.1997 EP 97300994
(43) Date of publication of application: 01.12.1999
(73) Proprietor: KRATON Polymers Research B.V., 1031 CM Amsterdam (NL)
(72) Inventor: GERARD, Eric-Jack, B-1348 Ottignies-Louvain-la-Neuve (BE); SCHNEIDER, Jurgen, Klaus, Leopold, London SE1 7NA (GB); VERVOORT, Freddy, Maria, Armand, B-1348 Ottignies-Louvain-la-Neuve (BE)
(74) Representative: Kortekaas, Marcellinus C. J. A.
(86) International application number: PCT/EP1998/000882
(87) International publication number: WO 1998/036025

(56) References cited:
- EP-A- 0 195 505
- EP-A- 0 429 236
- DE-A- 2 708 757

## Description

The present invention relates to modified polyolefins, including modified thermoplastic polyolefins. The present invention further relates to a process for preparing such modified polyolefins. Moreover, the present invention relates to articles containing the modified polyolefins.

Polyolefins, of course, are well known in the art. In the past decades a plethora of applications have been found, each application placing specific requirements on properties of the polyolefins and compositions containing polyolefins.

To be able to meet specific requirements, often a selected polyolefin is blended with other compounds, such as for example talc fillers, glass fibers and/or other polymers like ethylene/propylene rubber or hydrogenated styrene/diene/styrene block copolymer rubber. Such polyolefin blends are hereinafter referred to as modified polyolefins.

It will be appreciated that it is often difficult to improve one or more properties of modified polyolefins without negatively affecting one or more other properties, and that often compromises have to be made.

As is well known, painting on and adhesion to polyolefins is normally cumbersome in view of the apolar nature of the polyolefins.

The terms painting, a paint, and paintability as used herein are intended to include coating, a coat(ing), and coatability respectively.

Various surface treatments have been developed to improve paintability and adhesion onto polyolefins, such as an etching treatment, a plasma treatment or a flame treatment, each having significant disadvantages, as set out in more detail in e.g. US-A-5,256,734.

US-A-5,256,734 describes a modified polyolefin, that is a polypropylene resin composition which can be coated directly without any preliminary surface treatment. The composition comprises from 20 to 100 parts by weight of a hydrogenated styrene/butadiene or styrene/isoprene elastomeric block copolymer having a melt index of not less than 25 g/10 min, per 100 parts by weight of a polypropylene.

A disadvantage, however, is that the improvement in coatability places strict requirements on the composition, leaving limited room for amendment of other desirable properties.

JP-03-277636-A describes a modified polyolefin composition containing i) a propylene-ethylene block copolymer; ii) an ethylene-containing elastomer, a hydrogenated styrene-butadiene and/or styrene-isoprene block copolymer; iii) a hydroxylated diene polymer; and iv) a filler. The hydroxylated diene polymer is typically a diol.

EP-A-0 429 236 describes a coated resin molding composition comprising a propylene polymer and a 1.3-diene polymer preferably having from 1.5 to 5 hydroxyl groups per molecule.

A disadvantage of the modified polyolefins described in these publications is that the disclosed relatively low molecular weight polyhydroxy diene polymer bleeds out relatively easily. Thus, the modified polyolefin ages relatively rapidly, resulting e.g. in reduced adhesion to paints which have been applied to the modified polyolefin.

In the journal Plastic World of February 1996 featured an article regarding directly paintable thermoplastic polyolefins (TPO). According to this article, conventional TPO can be made directly paintable by melt blending into the formulation a low molecular weight polyether amine and a maleic anhydride functionalised polypropylene (MPP). The MPP and the polyether amine react to form a polar olefin-ether copolymer.

As disclosed at the ANTEC 1995 conference by R.J. Clark (ANTEC'95 conference proceedings pages 3306-3310), preference was given to MPP containing a relatively high level of maleation, ensuring a high level of reaction sites per molecule for the polyether amine.

The article in Plastic World claims that problems of bleeding out are overcome in this way, but acknowledges that the modified polyolefin product is fairly expensive. Moreover, due to the hydrophilicity of the polar olefin ether copolymer, the modified polyolefin will age fairly rapidly.

It would be desirable to be able to provide modified polyolefins which do not have one or more of the disadvantages associated with prior art modified polyolefins. In particular, it would be desirable to be able to provide modified polyolefins having an improved paintability and improved adhesion to adhesives, without surface treatments, without substantial negative effect on other important properties and without significant ageing.

Most surprisingly, such modified polyolefins have now been found.

Therefore, the present invention relates to a modified polyolefin comprising a polyolefin and 0.01 to 20 parts by weight (pbw) of a polydiene mono-ol per 100 parts by weight of the polyolefin, wherein the polydiene mono-ol has a functionality in the range from 0.6 to 0.95 functional groups per molecule. Preferably the polydiene mono-ol is present in an amount from 0.5 to 15 pbw, more preferably from 3.5 to 12 pbw, even more preferably from 5 to 10 pbw.

For the purposes of this specification a polydiene mono-ol is a polydiene containing a functional group substantially at one end of the polyolefin.

The functional group is located substantially at one end of the polydiene if the functional group is located at most 10 carbon atoms from the end of the polydiene structure, preferably at most 5 carbon atoms, more preferably at most 1 carbon atom. Most preferably, the functional group is located at one end of the polydiene structure.

The polydiene structure can be linear, or radial, that is a polydiene structure containing more than two arms. In the latter case, it will be appreciated that the functional group can be located at any one end of an arm of the polydiene structure. Preferably, the polydiene structure is linear.

The polymer backbone of the polydiene mono-ol is typically the polymerised product of a diene containing from 4 to 10 carbon atoms, more preferably from 4 to 6 carbon atoms, even more preferably butadiene or isoprene or mixtures thereof, most preferably butadiene and a vinylaromatic monomer.

The vinylaromatic monomer is preferably a vinylmonoaromatic monomer, such as styrene or alkylsubstituted styrene, wherein the alkyl-substituent(s) contain from 1 to 4 carbon atoms. More preferably, the vinylaromatic monomer is styrene or mono-alkyl-substituted styrene.

The polydiene mono-ol may contain up to 50% by weight of polymerised vinylaromatic monomer, preferably from 0 to 20% by weight, more preferably from 0 to 5% by weight.

Preferably, the polydiene mono-ol contains less than 20% olefinic unsaturation in the polymer backbone. More preferably, the olefinic unsaturation is less than 5%. Olefinic unsaturation as used herein is intended to exclude unsaturation present in any aromatic groups in the polymer. Ways to determine olefinic unsaturation are known to those skilled in the art. The polydiene mono-ol, preferably has a hydrogenated polydiene backbone, typically a hydrogenated polydiene backbone wherein the olefinic unsaturation is as discussed above.

Most preferably, hydrogenated polybutadiene mono-ol is used having a 1,2-addition between 30% and 70% to minimise viscosity and subsequent crystallisation.

The polydiene mono-ol has a functionality in the range from 0.6 to 0.95 functional groups per molecule. Preferably the functionality is at least 0.8, more preferably at least 0.85, even more preferably at least 0.9.

The functionality is defined as the number of functional groups, that is preferably hydroxyl groups, per molecule. The functionality can be determined by NMR or chemical titration techniques.

The polydiene mono-ol typically has a number average molecular weight in the range from 500 to 30000, preferably from 1000 to 20000 g/mol.

The polyolefin of the modified polyolefin composition may be an olefin homopolymer such as polyethylene and polypropylene, an olefin copolymer such as ethylene/propylene copolymers and block copolymers containing more than 50% by weight, preferably more than 75% by weight, more preferably more than 90% by weight, of blocks predominantly containing the polymerised product of an olefin monomer or olefin monomers.

For the purpose of this specification, with blocks predominantly containing the polymerised product of an olefin monomer or olefin monomers is meant that the said blocks should consist of at least 80% by weight of polymerised olefin monomer(s), preferably at least 90% by weight, more preferably at least 95% by weight.

The remainder of the predominantly polymerised olefin containing blocks and any other blocks may comprise the polymerised product of vinylaromatic monomers, acrylic monomers or acrylonitrile monomers, in particular vinylaromatic monomers.

Preferably, the polyolefin is an olefin homopolymer. In view of ready availability and costs, polyethylene and polypropylene are especially preferred, in particular polypropylene.

Alternatively, the polyolefin is a crystalline propylene/ethylene block copolymer having an ethylene content of 3 to 75% by weight, preferably 5 to 70% by weight, and/or a crystalline propylene/ethylene random co-polymer having an ethylene content of 0.5 to 10% by weight, preferably 1 to 5% by weight.

The number average molecular weight of the polyolefin is typically in the range from 50 to 1,500 kg/mol, preferably in the range from 50 to 1,000 kg/mol more preferably from 80 to 500 kg/mol.

It will be appreciated that the modified polyolefin may contain further compounds normally added to polyolefins to alter their properties. Examples include elastomers, to improve the impact strength, fillers, fibers as well as further additives like antioxidants.

The modified polyolefin typically further comprises from 3 to 50 parts by weight of an elastomer per 100 parts of polyolefin. Examples of suitable elastomers include ethylene/propylene copolymers, styrene/diene block copolymers, and other olefinic thermoplastic elastomers. For the purpose of this specification an elastomer is defined as having a Tg of less than -50°C and a number average molecular weight of 100,000 g/mol or more.

The modified polyolefin may further comprise from 0 to 50 pbw of a filler per 100 parts of polyolefin. Examples of suitable fillers include silica, talc, other silicates, and carbonates like calcium carbonate and calcium/magnesium carbonate.

The modified polyolefin may further comprise from 0 to 50 pbw of fibres per 100 parts of polyolefin. Examples of suitable fibres include glass fibres, carbon fibres, like aramide fibres, and rockwool.

The modified polyolefin may further comprise from 0 to 50 pbw of a plasticiser per 100 parts of polyolefin. Plasticisers which may be found useful include petroleum-derived oils, Fischer-Tropsch oils and waxes, olefin oligomers as well as vegetable and animal oils.

The olefin oligomers may be oligomers of olefin monomers having from 2 to 14 carbon atoms, in particular from 4 to 12 carbon atoms. Typically the oligomers have a number average molecular weight in the range from 350 to 10,000 g/mol.

The modified polyolefins may further comprise one or more of antioxidants, colour pigments, and UV stabilizers.

A particular preferred modified polyolefin comprises per 100 parts polyolefin, 5 to 50 pbw of an ethylene/propylene copolymer rubber; 5 to 50 pbw of a filler, in particular talc; 0 to 50 pbw of fibres, in particular glass fibres; and 0.5 to 10 pbw of a hydrogenated polydiene mono-ol as described herein before.

According to a further aspect, the present invention relates to a process for preparing a modified polyolefin as described herein, which comprises blending of a polyolefin and a polydiene mono-ol and, optionally, molding the blend.

According to yet another aspect, the present invention relates to a process for preparing a modified polyolefin as described herein, which comprises blending a polydiene mono-ol with a polyolefin in an amount of more than 20 parts by weight of the polydiene mono-ol per 100 parts by weight of the polyolefin to prepare a masterbatch and blending the masterbatch with a polyolefin, optionally followed by molding of the blend, to prepare the modified polyolefin.

Preferably, the masterbatch contains at most 50 parts by weight of the polydiene mono-ol per 100 parts by weight of the polyolefin. More preferably, the masterbatch contains from 25 to 45 parts by weight of the polydiene mono-ol.

If desired, any filler, elastomer and/or any other additives are blended with the polyolefin and the mono-telechelic polyolefin prior to molding.

Blending and molding methods are well known to those skilled in the art. A preferred method involves dry-blending of the various components, e.g. in a Banbury mixer, followed by injection molding or extrusion molding. Suitable process conditions include those taught in the art.

Alternatively, polydiene mono-ol, when liquid, may be injected directly into an extrusion line with the polyolefin to prepare the product according to the invention.

In the above process, preferably a polydiene mono-ol is used, more preferably a polydiene mono-ol which has been prepared by polymerising an olefin monomer with an initiator, thereby producing a living polymer, and end-capping the living polymer (living macromolecular species) with a hydroxyl-yielding functionalizing agent, typically when the living polymer has reached the desired molecular weight.

The polydiene mono-ol preferably used in this invention may be prepared anionically such as described in United States Patents Nos. 5,378,761, 5,391,663, 5,393,843, and 5,405,911.

According to this method, polymerisation of the polydiene mono-ol typically commences with a monolithium initiator which builds a living polymer backbone at each lithium site. The anionic polymerisation is carried out in solution in an organic solvent, typically a hydrocarbon like hexane, cyclohexane or benzene, although polar solvents such as tetrahydrofuran can also be used. The molar ratio of initiator to monomer determines the molecular weight of the polymer.

If the conjugated diene is 1,3-butadiene and the resulting polymer is to be hydrogenated, the anionic polymerisation of butadiene in a hydrocarbon solvent like cyclohexane is typically controlled with structure modifiers such as diethylether or glyme (1,2-diethoxyethane) to obtain the desired amount of 1,2-addition. The optimum balance between low viscosity and high solubility in a hydrogenated polybutadiene polymer occurs at a 60/40 ratio of 1,4-butadiene / 1,2-butadiene. This butadiene microstructure may e.g. be achieved during polymerisation at 50°C in cyclohexane containing about 6% by volume of diethylether or about 1000 ppm of glyme.

Anionic polymerisation is terminated by addition of a functionalizing agent like those in United States patent specification Nos. 5,391,637, 5,393,843, and 5,418,296, but preferably the living polymer is capped with ethylene oxide, prior to termination. Thus, each mole of living polymer is preferably capped with one mole of ethylene oxide and terminated with one mole of methanol to yield the desired polydiene mono-ol.

The polydiene mono-ol is preferably hydrogenated such that at least 90%, more preferably at least 95%, of the olefinic carbon to carbon double bonds in the diene is saturated. Hydrogenation of these polymers may be carried out by a variety of well established processes including hydrogenation in the presence of such catalysts as Raney Nickel, noble metals such as platinum and palladium, soluble transition metal catalysts and titanium catalysts as in United States patent specification No. 5,039,755. A particularly preferred catalyst is a mixture of nickel 2-ethylhexanoate and triethylaluminum.

The polybutadiene polymer preferably has no less than about 30% 1,2-butadiene addition because, after hydrogenation, the polymer will be a waxy solid at room temperature if it contained less than about 30% 1,2-butadiene addition. To minimise viscosity of the mono-ol, the 1,2-butadiene content is preferably between 40 and 60%.

If as conjugated diene for the preparation of the polydiene diol, isoprene is used, the isoprene polymers preferably have no less than 80% 1,4-isoprene addition in order to reduce Tg and viscosity. The diene microstructures are typically determined by ¹³C nuclear magnetic resonance (NMR) in chloroform.

The polydiene mono-ols preferably have hydroxyl equivalent weights in the range of from 500 to 15,000, more preferably in the range of from 1,000 to 12,500.

For the polydiene mono-ols suitable number average molecular weights will be between 500 and 15,000, more preferably between 1,000 and 12,500, most preferably between 1,500 and 6,000 g/mol.

The number average molecular weights referred to in this specification are number average molecular weights measured by gel permeation chromatography (GPC) calibrated with polybutadiene standards having known number average molecular weights. The solvent for the GPC analyses is tetrahydrofuran.

According to a further aspect, the present invention relates to articles containing modified polyolefins as described above. Examples of articles to be manufactured from the modified polyolefins include automotive parts like dashboards and bumpers.

It will be appreciated that there is a desire in the automotive industry to paint plastic automotive parts, in particular bumpers, in the same colour as the metal parts on the outside of the vehicle.

Up to now this has been an expensive and cumbersome process involving separate surface treatments. Alternatively, expensive engineering thermoplastics had to be used in the preparation of parts to be painted.

According to a preferred embodiment, the present invention relates to articles as described above which have been painted.

The invention will now be further illustrated by means of the following Examples.

### EXAMPLE 1

### Preparation of modified polyolefin

100 parts of a thermoplastic polypropylene compound, modified with ethylene-propylene rubber, marketed under the tradename HIFAX and available from Montell Polyolefins, was dry-blended with 8 pbw of a hydrogenated polybutadiene mono-ol having a functionality of 0.95 and a hydroxyl equivalent weight of 4200, marketed under the tradename KRATON Liquid Polymer L-1203, and available from Shell Chemical companies.

The blend was compounded using an extrusion line. Subsequently, the compounded blend was injection molded to form a modified polyolefin plate.

### Measurement of surface tension

The surface tension of the modified polyolefin plate was determined by a known technique, using a standard set of pencils. The surface tension of the modified polyolefin plate according to the invention was 38 dyne/cm, whereas the surface tension of a polyolefin plate containing the same HIFAX material but not the KRATON Liquid Polymer L-1203 material was less than 32 dyne/cm.

### Measurement of adhesion to the modified polyolefin

A conventional pressure sensitive adhesive tape, having a composition as outlined in Table I, was adhered to the modified polyolefin plate according to the invention. The loop tack (FTM 9) was measured.

**Table I**

| Tape backing: |
|---|
| Polyester marketed under the tradename MYLAR |

| Adhesive formulation: |
|---|
| 100 parts KRATON D-1161 elastomer (linear SIS block copolymer containing 15% by weight polystyrene) |
| 140 phr PICCOTAC 95E tackifying resin (Aliphatic C₅hydrocarbon resin available from Hercules) |
| 40 phr CATENEX 956 plasticiser (naphthenic oil) |
| 1 phr IRGANOX 1010 antioxidant (tetrakis-ethylene-(3,5-di-tertiary-butyl-4-hydroxy-hydrocinnamate)methane) |

The loop tack of the modified polyolefin according to the invention, as measured at 23 °C, was 13.0 +/- 0.5 N/25mm, whereas the loop tack of the unmodified HIFAX material was only 9.6 +/- 0.6 N/25mm.

### Example 2

### Preparation of Modified Polyolefin

Twelve different modified polyolefins were prepared by dry-blending three different polyolefins with 5 or 10% by weight of KRATON Liquid Polymer L-1203 or L-2203, followed by compounding of the blend using an extrusion line and injection moulding to form a modified polyolefin plate.

KRATON Liquid Polymer L-2203 is a hydrogenated polybutadiene diol having a functionality of 1.9 and a hydroxyl equivalent weight of 1700, available from Shell Chemical Companies.

The polyolefins used were PM 6100, PLZ 867 and CB180 A2 300, all obtained from Montell Polyolefins. PM 6100 is a homopolypropylene having a melt flow rate of 6 g/10 min, at 230°C. PLZ 867 is a polypropylene/polyethylene copolymer having a melt flow rate of 8 g/10 min, at 230°C. CB180 A2 300 is a low-shrinkage thermoplastic polyolefin (TPO) grade containing glass fibre and talc and having a melt flow rate of 6 g/10 min at 230°C.

### Measurement of surface tension

The polar surface tension γₚ and the dispersive surface tension γ_{d} of the 12 modified polyolefins and three not modified polyolefin samples were determined by contact angle measurement with water and α-bromo-naphthalene, according the harmonic mean method as described by S.Wu in "Polymer interface and adhesion", chapter 5, pages 178-181, M. Dekker Inc., 1982.

Results are presented in Table I. It can be seen that both the polar surface tension γₚ and the dispersive surface tension γ_{d} increases as a result of addition of either L-1203 or L-2203 (not according to the invention) relative to the not modified polyolefins. The surface tension of modified PM6100, containing is 10% L-2203 could not be adequately determined as L-2203 was bleeding out of the modified PM 6100 at room temperature.

### Determination of stability of modified polyolefins

The modified polyolefin samples were cut in three pieces, and were stored at 23°C, 65°C or 95°C for two, two and one week respectively, after having been wrapped in absorbing paper. Dark, wet spots on the absorbing paper were an indication of bleeding out.

Results are presented in Table II. It can be seen that all samples containing 10% L-2203 (not according to the invention) aged after only 2 weeks at 65°C or 1 week at 95°C. None of the samples containing 5% L-2203 actually showed ageing, but it is contemplated that they would show ageing at a more severe test. None of the modified polyolefins according to the invention showed ageing, including the modified polyolefins containing 10% L-1203.

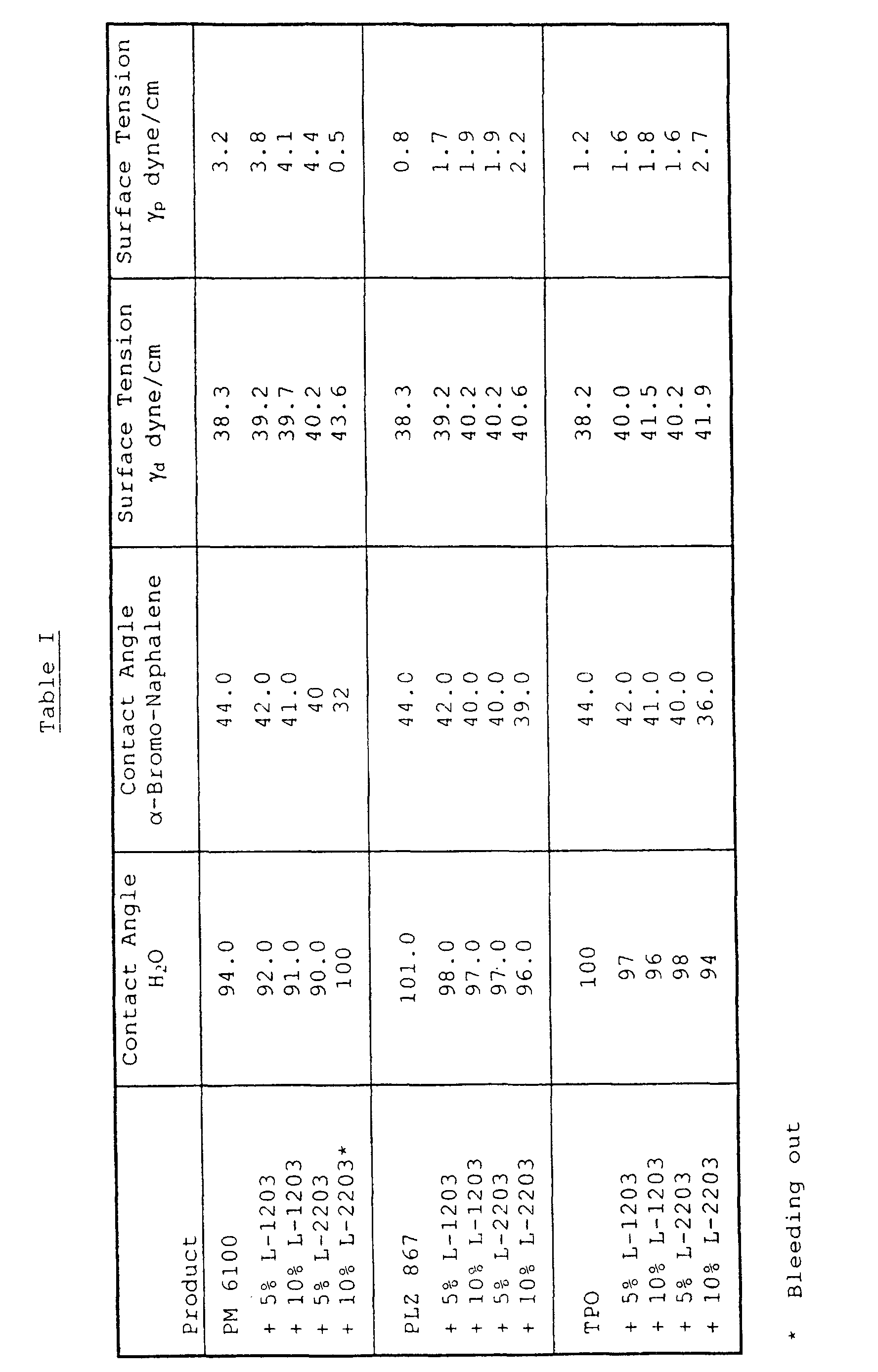

**Table II**

| Product | 23°C/2 weeks | 65°C/2 weeks | 95°C/1 week |
|---|---|---|---|
| PM 6100 | + | + | + |
| + 5% L-1203 | + | + | + |
| + 10% L-1203 | + | + | + |
| + 5% L-2203 | + | + | + |
| + 10% L-2203* | - | - | - |
| PLZ 867 | + | + | + |
| + 5% L-1203 | + | + | + |
| + 10% L-1203 | + | + | + |
| + 5% L-2203 | + | + | + |
| + 10% L-2203 | + | - | - |
| TPO | + | + | + |
| + 5% L-1203 | + | + | + |
| + 10% L-1203 | + | + | + |
| + 5% L-2203 | + | + | + |
| + 10% L-2203 | + | - | - |

## Claims

1. A modified polyolefin comprising a polyolefin and 0.01 to 20 parts by weight of a polydiene mono-ol per 100 parts by weight of the polyolefin, wherein the polydiene mono-ol has a functionality in the range from 0.6 to 0.95 functional groups per molecule.

2. The modified polyolefin as claimed in claim 1, wherein the polydiene mono-ol has 0.95 functional groups per molecule.

3. The modified polyolefin as claimed in claim 1, wherein the polydiene mono-ol has 0.6 functional groups per molecule.

4. The modified polyolefin as claimed in claim 1, wherein the polydiene mono-ol has a hydrogenated polydiene backbone.

5. The modified polyolefin as claimed in claim 1, wherein the polydiene mono-ol has 0.8 functional groups per molecule.

6. The modified polyolefin as claimed in claim 1, comprising 0.5 to 10 parts by weight of the polydiene mono-ol per 100 parts by weight of the polyolefin.

7. The modified polyolefin as claimed in claim 1, wherein the polydiene mono-ol has a number average molecular weight in the range from 1000 to 20000 g/mol.

8. The modified polyolefin as claimed in claim 1, further comprising from 3 to 50 parts by weight of an elastomer, per 100 parts by weight of polyolefin.

9. The modified polyolefin as claimed in claim 1, further comprising one or more additives chosen from the group consisting of fillers, fibres, plasticizers, antioxidants, colour pigments, and UV stabilizers.

10. A process for preparing a modified polyolefin which comprises:
blending of a polyolefin and 0.01 to 20 parts by weight of a polydiene mono-ol per 100 parts by weight of the polyolefin wherein the polydiene mono-ol has a functionality in the range from 0.6 to 0.95 functional groups per molecule; and
molding the blend.

11. The process as claimed in claim 10, wherein any filter, elastomer and/or any other additives are blended with the polyolefin and the polydiene mono-ol prior to molding.

12. The process as claimed in claim 10, wherein the polydiene mono-ol is prepared by polymerising a diene monomer with an initiator thereby producing a living polymer, and end-capping the living polymer with a hydroxyl-yielding functionalizing agent.

13. The process as claimed in claim 10 ,wherein up to 50 parts by weight of the polydiene mono-ol is first blended with 100 parts by weight of the polyolefin to create a masterbatch and then sufficient additional polyolefin is added to the masterbatch to bring the polydiene mono-ol concentration to 0.01 to 20 parts by weight per 100 parts of the polyolefin.

14. The process as claimed in claim 10, wherein the polydiene mono-ol has 0.95 functional groups per molecule.

15. The process as claimed in claim 10, wherein the polydiene mono-ol has 0.6 functional groups per molecule.

16. The process as claimed in claim 10, wherein the polydiene mono-ol has a hydrogenated polydiene backbone.

17. The process as claimed in claim 10, wherein the polydiene mono-ol has 0.8 functional groups per molecule.

18. A process for preparing a modified polyolefin which comprises:
blending up to 50 parts by weight of a polydiene mono-ol with 100 parts by weight of a polyolefin to create a masterbatch, wherein the polydiene mono-ol has from 0.6 to 0.95 functional groups per molecule;
blending the masterbatch with an additional amount of the polyolefin to reduce the polydiene mono-ol concentration to 0.01 to 20 parts by weight per 100 parts by weight of the polyolefin; and
molding the blend.

19. The process as claimed in claim 18, wherein the polydiene mono-ol has 0.95 functional groups per molecule.

20. The process as claimed in claim 18, wherein the masterbatch is prepared with 45 parts per weight of the polydiene mono-ol.

## Patentansprüche

1. Modifiziertes Polyolefin umfassend ein Polyolefin und 0.01 bis 20 Gewichtsteile eines Polydien-Mono-ols auf 100 Gewichtsteile Polyolefin, wobei das Polydien-Mono-ol eine Funktionalität aufweist, die im Bereich von 0.6 bis 0.95 funktionelle Gruppen pro Molekül liegt. :

2. Modifiziertes Polyolefin nach Anspruch 1, wobei das Polydien-Mono-ol 0.95 funktionelle Gruppen pro Molekül aufweist.

3. Modifiziertes Polyolefin nach Anspruch 1, wobei das Polydien-Mono-ol 0.6 funktionelle Gruppen pro Molekül aufweist.

4. Modifiziertes Polyolefin nach Anspruch 1, wobei das Polydien-Mono-ol ein hydriertes Polydiengrundgerüst aufweist.

5. Modifiziertes Polyolefin nach Anspruch 1, wobei das Polydien-Mono-ol 0.8 funktionelle Gruppen pro Molekül aufweist.

6. Modifiziertes Polyolefin nach Anspruch 1, umfassend 0.5 bis 10 Gewichtsteile des Polydien-Mono-ols auf 100 Gewichtsteile Polyolefin.

7. Modifiziertes Polyolefin nach Anspruch 1, wobei das Polydien-Mono-ol ein zahlengemitteltes Molekulargewicht im Bereich von 1000 bis 20.000 g/mol aufweist.

8. Modifiziertes Polyolefin nach Anspruch 1, weiter umfassend 3 bis 50 Gewichtsteile eines Elastomers bezogen auf 100 Gewichtsteile Polyolefin.

9. Modifiziertes Polyolefin nach Anspruch 1, weiter umfassend ein oder mehrere Zusatzstoffe ausgewählt aus der Gruppe bestehend aus Füllstoffen, Fasern, Weichmachern, Antioxidantien, Farbpigmenten und UV-Stabilisatoren.

10. Verfahren zur Herstellung eines modifizierten Polyolefins, das umfaßt :
das Mischen eines Polyolefins mit 0.01 bis 20 Gewichtsteilen eines Polydien-Mono-ols bezogen auf 100 Gewichtsteile des Polyolefins, wobei das Polydien-Mono-ol eine Funktionalität aufweist, die im Bereich von 0.6 bis 0.95 funktionelle Gruppen pro Molekül liegt ; und
das in-Form-Gießen der Mischung.

11. Verfahren nach Anspruch 10, wobei jeder Füllstoff, jedes Elastomer und/oder alle anderen Zusatzstoffe mit dem Polyolefin und dem Polydien-Mono-ol vor dem in-Form-Gießen gemischt werden.

12. Verfahren nach Anspruch 10, wobei das Polydien-Mono-ol durch Polymerisieren eines Dien-Monomers mit einem Initiator hergestellt wird, wodurch ein lebendes Polymer entsteht und durch terminales Verkappen des lebenden Polymers mit einem Funktionalisierungsmittel, das Hydroxylgruppen liefert.

13. Verfahren nach Anspruch 10, wobei bis zu 50 Gewichtsteile des Polydien-Mono-ols zuerst mit mit 100 Gewichtsteilen des Polyolefins zur Erzeugung einer Ausgangsmischung gemischt werden und anschließend genügend weiteres Polyolefin zu der Ausgangsmischung zugegeben wird, um die die Polydien-Mono-ol Konzentration auf 0.01 bis 20 Gewichtsteile je 100 Gewichtsteile Polyolefin zu bringen.

14. Verfahren nach Anspruch 10, wobei das das Polydien-Mono-ol 0.95 funktionelle Gruppen pro Molekül aufweist.

15. Verfahren nach Anspruch 10, wobei das Polydien-Mono-ol 0.6 funktionelle Gruppen pro Molekül aufweist.

16. Verfahren nach Anspruch 10, wobei das Polydien-Mono-ol ein hydriertes Polydiengrundgerüst aufweist.

17. Verfahren nach Anspruch 10, wobei das Polydien-Mono-ol 0.8 funktionelle Gruppen pro Molekül aufweist.

18. Verfahren zur Herstellung eines modifizierten Polyolefins, das umfaßt :
das Mischen von bis zu 50 Gewichtsteilen eines Polydien-Mono-ols mit 100 Gewichtsteilen eines Polyolefins zur Herstellung einer Ausgangsmischung, wobei das Polydien-Mono-ol 0.6 bis 0.95 funktionelle Gruppen pro Molekül aufweist ;
das Mischen der Ausgangsmischung mit einer weiteren Menge des Polyolefins zur Verminderung der Polydien-Mono-ol Konzentration auf 0.01 bis 20 Gewichtsteile je 100 Gewichtsteile Polyolefin ; und
das in-Form-Gießen der Mischung.

19. Verfahren nach Anspruch 18, wobei das Polydien-Mono-ol 0.95 funktionelle Gruppen pro Molekül aufweist.

20. Verfahren nach Anspruch 18, wobei die Ausgangsmischung mit 45 Gewichtsteilen des Polydien-Mono-ols hergestellt wird.

## Revendications

1. Polyoléfine modifiée comprenant une polyoléfine et de 0,01 à 20 parties en poids d'un polydiène mono-ol par 100 parties en poids de la polyoléfine, dans laquelle le polydiène mono-ol présente une fonctionnalité comprise dans la plage allant de 0,6 à 0,95 groupe fonctionnel par molécule.

2. Polyoléfine modifiée selon la revendication 1, dans laquelle le polydiène mono-ol présente une fonctionnalité de 0,95 groupe fonctionnel par molécule.

3. Polyoléfine modifiée selon la revendication 1, dans laquelle le polydiène mono-ol présente une fonctionnalité de 0,6 groupe fonctionnel par molécule.

4. Polyoléfine modifiée selon la revendication 1, dans laquelle le polydiène mono-ol présente un squelette de polydiène hydrogéné.

5. Polyoléfine modifiée selon la revendication 1, dans laquelle le polydiène mono-ol possède 0,8 groupe fonctionnel par molécule.

6. Polyoléfine modifiée selon la revendication 1, comprenant de 0,5 à 10 parties en poids de polydiène mono-ol par 100 parties en poids de la polyoléfine.

7. Polyoléfine modifiée selon la revendication 1, dans laquelle le polydiène mono-ol présente une moyenne numérique de poids moléculaire comprise dans la plage allant de 1000 à 20000 g/mole.

8. Polyoléfine modifiée selon la revendication 1, comprenant en outre de 3 à 50 parties en poids d'un élastomère, par 100 parties en poids de polyoléfine.

9. Polyoléfine modifiée selon la revendication 1, comprenant en outre un ou plusieurs additifs choisis dans le groupe formé par des matières de remplissage, des fibres, des plastifiants, des antioxydants, des pigments de couleur, et des stabilisants aux UV.

10. Procédé pour la préparation d'une polyoléfine modifiée, comprenant :
le mélange d'une polyoléfine et de 0,01 à 20 parties en poids d'un polydiène mono-ol par 100 parties en poids de la polyoléfine, le polydiène mono-ol présentant une fonctionnalité comprise dans la plage allant de 0,6 à 0,95 groupe fonctionnel par molécule et
le moulage du mélange

11. Procédé tel que revendiqué dans la revendication 10, dans lequel on mélange une matière de remplissage, un élastomère et/ou un autre additif à la polyoléfine et au polydiène mono-ol avant le moulage.

12. Procédé tel que revendiqué dans la revendication 10, dans lequel le polydiène mono-ol est préparé par polymérisation d'un monomère de diène avec un initiateur, avec production d'un polymère vivant, et blocage des extrémités du polymère vivant par un agent fonctionnalisant produisant un hydroxyle.

13. Procédé tel que revendiqué dans la revendication 10, dans lequel on mélange d'abord jusqu'à 50 parties en poids du polydiène mono-ol avec 100 parties en poids de la polyoléfine afin de réaliser un mélange maître, et on ajoute ensuite de la polyoléfine additionnelle au mélange maître pour porter la concentration de polydiène mono-ol à 0,01 à 20 parties en poids par 100 parties de la polyoléfine.

14. Procédé tel que revendiqué dans la revendication 10, dans lequel le polydiène mono-ol présente une fonctionnalité de 0,95 groupe fonctionnel par molécule.

15. Procédé tel que revendiqué dans la revendication 10, dans lequel le polydiène mono-ol présente une fonctionnalité de 0,6 groupe fonctionnel par molécule.

16. Procédé tel que revendiqué dans la revendication 10, dans lequel le polydiène mono-ol présente un squelette polydiène hydrogéné.

17. Procédé tel que revendiqué dans la revendication 10, dans lequel le polydiène mono-ol présente une fonctionnalité de 0,8 groupe fonctionnel par molécule.

18. Procédé pour la préparation d'une polyoléfine modifiée, comprenant :
le mélange de jusqu'à 50 parties en poids d'un polydiène mono-ol avec 100 parties en poids d'une polyoléfine afin de réaliser un mélange maître, où le polydiène mono-ol présente une fonctionnalité comprise dans la plage allant de 0,6 à 0,95 groupe fonctionnel par molécule,
le malaxage du mélange maître avec une quantité additionnelle de la polyoléfine pour réduire la concentration de polydiène mono-ol à 0,01 à 20 parties en poids par 100 parties en poids de la polyoléfine, et
le moulage du mélange.

19. Procédé tel que revendiqué dans la revendication 18, dans lequel le polydiène mono-ol présente une fonctionnalité de 0,95 groupe fonctionnel par molécule.

20. Procédé tel que revendiqué dans la revendication 18, dans lequel le mélange maître est préparé avec 45 parties en poids de polydiène mono-ol.
